# EUROPÄISCHE PATENTSCHRIFT

(11) **EP 0 913 424 B1**
(45) Veröffentlichungstag und Bekanntmachung des Hinweises auf die Patenterteilung: **01.12.2004**
(21) Anmeldenummer: 98118982.2
(22) Anmeldetag: 07.10.1998
(51) Int. Cl.: C08J 9/224, C08J 9/228, C08L 25/04

(54) **Beschichtete expandierbare Polystyrolpartikel**
Coated expansible styrene particles
Perles styréniques expansibles recouvertes

(30) Priorität: 28.10.1997 DE 19747539
(43) Veröffentlichungstag der Anmeldung: 06.05.1999
(73) Patentinhaber: BASF AKTIENGESELLSCHAFT, 67056 Ludwigshafen (DE)
(72) Erfinder: Hahn, Klaus, Dr., 67281 Kirchheim (DE); Löffler, Achim, Dr., 76137 Karlsruhe (DE); Steinbrecher, Horst, 67354 Römerberg (DE); Naegele, Dieter, Dr., 67550 Worms (DE); Hohwiller, Frieder, 67098 Bad Dürkheim (DE); Batscheider, Karl-Heinz, 67112 Mutterstadt (DE)

(56) Entgegenhaltungen:
- EP-A- 0 449 065
- PATENT ABSTRACTS OF JAPAN vol. 018, no. 166 (P-1713), 18. März 1994 (1994-03-18) & JP 05 333585 A (SOKEN KAGAKU KK), 17. Dezember 1993 (1993-12-17)

## Beschreibung

Die Erfindung betrifft treibmittelhaltige, expandierbare Polystyrol(EPS)-Partikel, aus denen Formkörper mit verminderter Wasseraufnahmefähigkeit bzw. verringerter Wasserdurchlässigkeit hergestellt werden können.

Bei vielen Einsatzgebieten von Polystyrolschaumstoffen, beispielsweise für Dachisolierungen, Perimeterdämmung oder Fischkisten, kommt es zu einer Einwirkung von Wasser auf die Schaumstoff-Formteile. Dabei besteht die Gefahr, daß Feuchtigkeit in das Innere des Schaumstoffs eindringt, was zu einer Verringerung der Isolierwirkung führt.

Bisher wurde die Wasseraufnahme von Platten und Formteilen aus Polystyrolpartikelschaum zumeist durch Aufbringen einer Kunststoffolie oder Lackierung der fertigen Formteile verhindert bzw. verringert. Das erfordert jedoch einen zusätzlichen Verfahrensschritt, außerdem ist bei komplizierten Formen dieser Überzug nicht überall gleichmäßig.

Eine weitere Möglichkeit der Minimierung des Wassereintritts in Formteile aus Polystyrol-Partikelschaum besteht darin, das Volumen zwischen den EPS-Partikeln, die sogenannten Zwickel, möglichst gering zu halten. Das kann erreicht werden durch Erhöhung von Druck und Temperatur des zum Ausschäumen verwendeten Wasserdampfes. Nachteilig ist hierbei jedoch, daß dadurch die Herstellungszeit der Formteile erhöht wird, und daß bei Erhöhung der Temperatur ein erhöhter Energieverbrauch bei der Formteilherstellung resultiert.

Die PCT-Patentanmeldung PCT/DE 97/02 362 betrifft EPS-Partikel mit verminderter Wasseraufnahme, die mit einem Hydrophobierungsmittel beschichtet sind. Als geeignete Hydrophobierungsmittel sind Paraffinwachse, Umsetzungsprodukte aus einem N-Methylolamin und einem Fettsäurederivat, sowie Polyfluoralkyl(meth)acrylate genannt.

Aufgabe der vorliegenden Erfindung war es, weitere Polystyrolpartikelschaumstoffe mit verminderter Wasseraufnahmefähigkeit bereitzustellen, die einfach und ohne zusätzliche Verfahrensschritte hergestellt werden können.

Diese Aufgabe wird gelöst durch treibmittelhaltige EPS-Partikel, die mit einem Metallcarboxylat beschichtet sind. Gegenstand der Erfindung sind demzufolge treibmittelhaltige, expandierbare Polystyrol(EPS)-Partikel, mit einem Durchmesser zwischen 0,35 und 3 mm die mit 0,005 bis 0,3 Gew.-% eines Carboxylats des Aluminiums, Zirkoniums oder Hafniums als Hydrophobierungsmittel beschichtet sind, welches oberhalb von 10°C schmilzt. Ein weiterer Gegenstand der Erfindung sind entsprechend beschichtete expandierte Polystyrolpartikel.

Es ist üblich, EPS-Partikel mit Stearaten, z.B. Glycerinmonostearat oder Zinkstearat als Mittel zur Verkürzung der Kühlzeit zu beschichten. Diese Stearate wirken jedoch nicht als Hydrophobierungsmittel. Man hat auch schon flüssige Paraffinöle zur Verkürzung der Kühlzeit bei der Formteilherstellung auf EPS-Partikel aufgebracht, was aber zu verringerter Expandierfähigkeit führt.

Die EP-B 449 065 beschreibt äußerst feinteilige EPS-Partikel als Füllstoff für Leichtputz. Es handelt sich um Siebfraktionen mit einem Teilchendurchmesser von 0,025 bis 0,3 mm, die mit mindestens 0,5 Gew.-% einer hydrophoben Feststoffs als Antiverklebungsmittel beschichtet sind. Neben vielen anderen Feststoffen ist auch Aluminiumstearat genannt.

EPS-Partikel werden nach an sich üblichen und bekannten Verfahren hergestellt. Dazu wird das monomere Styrol, gegebenenfalls im Gemisch mit anderen olefinisch ungesättigten Comonomeren, Initiatoren, Hilfs- und Zusatzstoffen in Wasser suspendiert und in Gegenwart von Suspensionsstabilisatoren polymerisiert. Die entstehenden Polystyrolperlen werden abgetrennt, gewaschen und getrocknet. Die Zugabe des Treibmittels kann dabei bereits während der Polymerisation erfolgen, es ist jedoch auch möglich, das Treibmittel in einem nachfolgenden Verfahrensschritt in die Polystyrolperlen einzubringen. Geeignete Treibmittel sind C₄-C₈-Kohlenwasserstoffe, vorzugsweise Pentan.

Die EPS-Partikel sind erfindungsgemäß mit 0,005 bis 0,3, vorzugsweise mit 0,01 bis 0,3 Gew.-%, jeweils bezogen auf Feststoff, des Carboxylats beschichtet, welches oberhalb von 10°C schmilzt.

Bevorzugte Carboxylate sind C₁- bis C₂₀-Carboxylate von Aluminium und Zirkonium, insbesondere Aluminiumacetat ("essigsaure Tonerde"), Aluminiumpalmitat und Zirkoniumacetat. Geeignet sind auch Mischungen dieser Carboxylate, sowie Mischungen mit anderen Hydrophobierungsmitteln, z.B. Paraffinen mit 10 bis 30 Kohlenstoffatomen.

Die Herstellung der erfindungsgemäßen EPS-Partikel erfolgt vorzugsweise durch Beschichten mit einer wäßrigen Lösung der Hydrophobierungsmittel. In dieser Lösung sind die festen Hydrophobierungsmittel in einer Menge von 5 bis 50 Gew.-%, vorzugsweise von 10 bis 40 Gew.-% enthalten.

Die wäßrige Lösung des Hydrophobierungsmittels wird vorzugsweise auf die EPS-Partikel unmittelbar nach der Aufarbeitung und Trocknung aufgebracht und zwar zweckmäßigerweise zusammen mit anderen üblichen Beschichtungsmitteln, wie Antiverklebungsmitteln, z.B. Metallstearate und feinteilige Kieselsäure, sowie Mitteln zur Verkürzung der Entformzeit, wie Glycerinester und Hydroxycarbonsäureester. Man kann die Hydrophobierungsmittel auch an porenhaltige Feststoffe, wie z.B. feinteilige Kieselsäure adsorbieren, vorzugsweise in Mengen von 5 bis 50 Gew.-%, und damit die Beschichtung vornehmen. Da durch die Beschichtung mit dem Hydrophobierungsmittel die Entflammbarkeit der Schaumstoffe heraufgesetzt werden kann, ist es in manchen Fällen zweckmäßig, zusammen mit dem Hydrophobierungsmittel auch noch Flammschutzmittel, z.B. Bromverbindungen wie Hexabromcyclododecan, in Mengen von 0,01 bis 0,5 Gew.-%, bezogen auf EPS, aufzubringen. Es ist grundsätzlich auch möglich, die wäßrige Lösung auf vorgeschäumte EPS-Partikel aufzubringen. In beiden Fällen erfolgt der Auftrag durch Besprühen oder vorzugsweise durch Auftrommeln in einem üblichen Trommelmischer.

Schließlich kann man das Hydrophobierungsmittel auch bei der Herstellung der EPS-Partikel durch Polymerisation von Styrol in wäßriger Suspension zusetzen.

Nach der Behandlung der EPS-Partikel mit den Hydrophobierungsmitteln werden die Partikel getrocknet. Das geschieht üblicherweise mit Luft bei Raumtemperatur oder leicht erhöhter Temperatur, die jedoch bei der Behandlung von unverschäumten Partikeln soweit unterhalb ihrer Erweichungstemperatur liegen muß, daß ein unbeabsichtigtes Aufschäumen und ein Entweichen des Treibmittel verhindert wird. Der Durchmesser der EPS-Partikel liegt zwischen 0,35 und 3 mm, vorzugsweise zwischen 0,4 und 2 mm. Randfraktionen mit kleinerem bzw. größerem Durchmesser werden ausgesiebt.

Die Verschäumung der mit Treibmittel enthaltenden EPS-Partikel zu Schaumstoffen erfolgt üblicherweise ebenfalls nach den im Stand der Technik bekannten Verfahren, indem sie zunächst mit Wasserdampf in offenen oder geschlossenen Vorschäumem vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im 5 allgemeinen eine mittlere Partikelgröße von 1 bis 10 mm, insbesondere von 2 bis 8 mm auf.

Weitere Angaben zu den üblichen Polymerisations-, Imprägnier-, und Schäumverfahren finden sich beispielsweise im Kunststoffhandbuch, Band 5, Polystyrol, herausgegeben von R. Vieweg und G. Daumiller, Carl-Hanser-Verlag München, 1969.

Überraschenderweise kommt es durch die erfindungsgemäße Behandlung mit den Hydrophobierungsmitteln zu keinerlei Nachteilen bei den mechanischen und den Verarbeitungseigenschaften der Styrolpolymerisate. Es treten auch keine Erhöhungen der Entformzeiten auf.

Hydrophobierungsmittel werden normalerweise angewandt um flächige Materialien, wie Textilien, Leder oder Papier wasserabstoßend zu machen. Es war nicht zu erwarten, daß sie - auf expandierbare Partikel aufgebracht - nach deren Aufschäumen und Versintern zu einem Formteil dieses wasserundurchlässig machen können, und daß durch die Beschichtung die Verschweißung der expandierten Partikel nicht behindert wird.

Die erfindungsgemäßen expandierten Polystyrolpartikel können mit Vorteil zur Herstellung von solchen Formteilen eingesetzt werden, die ständiger Wassereinwirkung ausgesetzt sind, z.B. für Platten für die Dachisolierung oder Perimeterdämmung, für Schwimmkörper oder wasserempfindliche Verpackungsmaterialien, wie Fischkisten.

Die in den Beispielen genannten Teile und Prozente beziehen sich auf das Gewicht.

Die Wasseraufnahme wurde nach DIN 53 433 gemessen, die Wasserdurchlässigkeit nach folgender Methode: Auf eine Schaumstoffplatte einer Dicke von 100 mm wurde ein Rohr von 100 mm Durchmesser geklebt und mit einer Wassersäule von 100 mm Höhe gefüllt.

Nach 24 Stunden wurde geprüft, ob auf der Unterseite der Schaumstoffplatte ein Wasseraustritt zu beobachten ist. Das Absenken des Wasserspiegels wurde in mm Wassersäule gemessen. Vor den Versuchen wurden die Schaumstoffplatten 24 Stunden im Trockenschrank bei 60°C konditioniert. Danach wurden die Rohre mittels Silikonkautschuk aufgeklebt.

### Beispiel

In einem Schaufelmischer mit einem Volumen von 40 l wurden 25 kg EPS (Perlgröße 0,4-0,7 mm, Pentangehalt 6,1 %) mit den in der Tabelle 1 aufgegebenen Beschichtungsmitteln 10 min bei 25°C intensiv gemischt.

Anschließend wurden die beschichteten Perlen in einem drucklosen Schäumkasten (System Rauscher) vorgeschäumt und nach 12 Stunden zu plattenförmigen Formteilen (Raumgewicht 20 kg/m³) verarbeitet.

Tabelle 1 zeigt die Zusammensetzung der Beschichtungen und die gemessenen Eigenschaften der Platten. Der Versuch 1 ist nicht erfindungsgemäß.

**Tabelle 1**

| Versuch | Beschichtung % bezogen auf EPS | Wasseraufnahme % | Wasserdichtigkeit mm |
|---|---|---|---|
| 1 | 0,25 GTS | 5,8 | 28 |
| | 0,12 Aerosil R 972 | | |
| | 0,13 Zn-Stearat | | |
| 2 | 0,25 GTS | 0,7 | 8 |
| | 0,12 Aerosil R 972 | | |
| | 0,13 Zn-Stearat | | |
| | 0,20 Aluminiumacetat | | |
| GTS = technisches Glycerintristearat Aerosil R 972 = feinteilige Kieselsäure (Fa. DEGUSSA) essigsäure Tonerde= etwa 20 %ige wässrige Lösung von basischem Aluminiumacetat | | | |

## Patentansprüche

1. Treibmittelhaltige, expandierbare Polystyrol (EPS)-Partikel, mit einem Durchmesser zwischen 0,35 und 3 mm, die mit 0,005 bis 0,3 Gew.-% eines Hydrophobierungsmittels beschichtet sind, welches oberhalb von 10°C schmilzt, **dadurch gekennzeichnet, daß** das Hydrophobierungsmittel ein Carboxylat von Aluminium, Zirkonium oder Hafnium ist.

2. Expandierbare Polystyrolpartikel nach Anspruch 1, **dadurch gekennzeichnet, daß** das Hydrophobierungsmittel Aluminiumacetat, Aluminiumpalmitat oder Zirkoniumacetat ist.

3. Expandierbare Polystyrolpartikel nach Anspruch 1, **dadurch gekennzeichnet, daß** sie mit einer wäßrigen Lösung des Hydrophobierungsmittels beschichtet sind.

4. Verfahren zur Herstellung der expandierbaren Polystyrolpartikel nach Anspruch 1, **dadurch gekennzeichnet, daß** man expandierbare Polystyrolpartikel mit einer wäßrigen Lösung behandelt, die 5 bis 50 Gew.-% des Hydrophobierungsmittels enthält.

5. Verfahren nach Anspruch 4, **dadurch gekennzeichnet, daß** zusätzlich zu dem Hydrophobierungsmittel noch Flammschutzmittel und/oder Antiverklebungsmittel und/oder Mittel zur Verkürzung der Entformzeit auf die EPS-Partikel aufgebracht werden.

6. Verfahren nach Anspruch 4, **dadurch gekennzeichnet, daß** die Behandlung durch Besprühen oder Auftrommeln vorgenommen wird.

7. Verfahren nach Anspruch 4, **dadurch gekennzeichnet, daß** die wäßrige Lösung des Hydrophobierungsmittels in feinteiliger Kieselsäure aufgenommen wird, und die expandierbaren Polystyrolpartikel mit der dabei entstandenen Pulvermischung beschichtet werden.

8. Verfahren zur Herstellung der expandierbaren Polystyrolpartikel nach Anspruch 1, **dadurch gekennzeichnet, daß** festes Hydrophobierungsmittel an feinteiliger Kieselsäure adsorbiert wird, und die EPS-Partikel damit beschichtet werden.

9. Expandierte Polystyrolpartikel, **dadurch gekennzeichnet, daß** sie mit 0,005 bis 0,3 Gew.-% des Hydrophobierungsmittels nach Anspruch 1 beschichtet sind.

10. Verfahren zur Herstellung von expandierten Polystyrolpartikeln, **dadurch gekennzeichnet, daß** man beschichtete EPS-Partikel nach Anspruch 1 verschäumt.

11. Verfahren zur Herstellung von expandierten Polystyrolpartikeln, **dadurch gekennzeichnet, daß** man expandierte Polystyrolpartikel mit 0,005 bis 0,3 Gew.-% des Hydrophobierungsmittels nach Anspruch 1 beschichtet.

12. Verwendung der expandierten Polystyrolpartikel nach Anspruch 9 zur Herstellung von Dachisolierungen, Perimeterdämmplatten, Schwimmkörpern oder wasserempfindlichen Verpackungsmaterialien.

## Claims

1. Expandable polystyrene (EPS) particles which contain blowing agent, have a diameter of from 0.35 to 3 mm and are coated with from 0.005 to 0.3% by weight of a hydrophobicizing agent which melts at above 10°C, wherein the hydrophobicizing agent is a carboxylate of aluminum, zirconium or hafnium.

2. Expandable polystyrene particles as claimed in claim 1, wherein the hydrophobicizing agent is aluminum acetate, aluminum palmitate or zirconium acetate.

3. Expandable polystyrene particles as claimed in claim 1 which are coated with an aqueous solution of the hydrophobicizing agent.

4. A process for producing the expandable polystyrene particles as claimed in claim 1, which comprises treating expandable polystyrene particles with an aqueous solution comprising from 5 to 50% by weight of the hydrophobicizing agent.

5. A process as claimed in claim 4, wherein flame retardants and/or anticaking agents and/or agents for shortening the demolding time are applied to the EPS particles in addition to the hydrophobicizing agent.

6. A process as claimed in claim 4, wherein the treatment is carried out by spraying or tumbling.

7. A process as claimed in claim 4, wherein the aqueous solution of the hydrophobicizing agent is absorbed in finely divided silica and the expandable polystyrene particles are coated with the resulting powder mixture.

8. A process for producing the expandable polystyrene particles as claimed in claim 1, which comprises adsorbing solid hydrophobicizing agent on finely divided silica and coating the EPS particles with this.

9. Expanded polystyrene particles which are coated with from 0.005 to 0.3% by weight of the hydrophobicizing agent as claimed in claim 1.

10. A process for producing expanded polystyrene particles, which comprises foaming coated EPS particles as claimed in claim 1.

11. A process for producing expanded polystyrene particles, which comprises coating expanded polystyrene particles with from 0.005 to 0.3% by weight of the hydrophobicizing agent as claimed in claim 1.

12. The use of the expanded polystyrene particles as claimed in claim 9 for producing roof insulation, perimeter insulation boards, buoyant articles or water-sensitive packaging materials.

## Revendications

1. Particules de polystyrène expansibles (PSE) contenant un agent porogène, d'un diamètre entre 0,35 et 3 mm, revêtues de 0,005 à 0,3% en poids d'un agent d'hydrophobisation, lequel fond au-dessus de 10°C, **caractérisées en ce que** l'agent d'hydrophobisation est un carboxylate d'aluminium, de zirconium ou de hafnium.

2. Particules de polystyrène expansibles selon la revendication 1, **caractérisées en ce que** l'agent d'hydrophobisation est de l'acétate d'aluminium, du palmitate d'aluminium ou de l'acétate de zirconium.

3. Particules de polystyrène expansibles selon la revendication 1, **caractérisées en ce qu'**elles sont revêtues au moyen d'une solution aqueuse de l'agent d'hydrophobisation.

4. Procédé de préparation des particules de polystyrène expansibles selon la revendication 1, **caractérisé en ce que** l'on traite les particules de polystyrène expansibles par une solution aqueuse contenant de 5 à 50% en poids de l'agent d'hydrophobisation.

5. Procédé selon la revendication 4, **caractérisé en ce que**, outre l'agent d'hydrophobisation, on applique aussi sur les particules d'EPS des agents ignifuges et/ou des agents antiadhésifs et/ou des agents destinés à raccourcir le temps de démoulage.

6. Procédé selon la revendication 4, **caractérisé en ce que** le traitement est réalisé par pulvérisation ou par tonnelage.

7. Procédé selon la revendication 4, **caractérisé en ce que** la solution aqueuse de l'agent d'hydrophobisation est absorbée dans de l'acide silicique à fines particules, et que les particules de polystyrène expansibles sont enrobées du mélange pulvérulent ainsi obtenu.

8. Procédé de préparation des particules de polystyrène expansibles selon la revendication 1, **caractérisé en ce qu'**un agent d'hydrophobisation solide est adsorbé sur de l'acide silicique à fines particules et qu'on en enrobe les particules d'EPS.

9. Particules de polystyrène expansibles, **caractérisées en ce qu'**elles sont revêtues de 0,005 à 0,3% en poids de l'agent d'hydrophobisation selon la revendication 1.

10. Procédé de préparation de particules de polystyrène expansées, **caractérisé en ce qu'**on expanse des particules d'EPS enrobées selon la revendication 1.

11. Procédé de préparation de particules de polystyrène expansées, **caractérisé en ce que** l'on enrobe des particules de polystyrène expansées au moyen de 0,005 à 3% en poids de l'agent d'hydrophobisation selon la revendication 1.

12. Utilisation des particules de polystyrène expansées selon la revendication 9 pour la production d'isolations de toiture, de panneaux isolants périmétriques, de flotteurs et de matériaux d'emballage sensibles à l'eau.
